# EUROPEAN PATENT SPECIFICATION

(11) **EP 4 235 443 B1**
(45) Date of publication and mention of the grant of the patent: **23.10.2024**
(21) Application number: 22165391.8
(22) Date of filing: 30.03.2022
(51) Int. Cl.: G06F 13/12, H04L 45/586

(54) **DEVICE AND METHOD OF HANDLING PACKET TUNNEL**
VORRICHTUNG UND VERFAHREN ZUR HANDHABUNG DER PAKETWEITERLEITUNG
DISPOSITIF ET PROCÉDÉ DE GESTION DE TUNNEL DE PAQUETS

(30) Priority: 24.02.2022 TW 111106703
(43) Date of publication of application: 30.08.2023
(73) Proprietor: Moxa Inc., New Taipei City 242 (TW)
(72) Inventor: Chen, Ching-Hung, 242 New Taipei City (TW)
(74) Representative: Straus, Alexander

(56) References cited:
- US-A1- 2019 297 053

## Description

### Field of the Invention

The present invention relates to a device and a method of handling a packet tunnel.

### Background of the Invention

A core layer of a network device performs a routing process (determines a transmission path of a packet) and a tunneling process (builds a tunnel) for a received packet according to a routing table, when a routing is operated in a wireless network. However, it costs lots of time for the core layer to perform the routing process and the tunneling process for every packet. Thus, how to improve the packet tunnel to handle the routing of the packet efficiently is an important problem to be solved. There is still room for improvement when it comes to methods in the prior art (e.g., Document DI (US20190297053A1)).

### Summary of the Invention

The application aims at providing a network device and a method of handling a packet tunnel to solve the abovementioned problem.

This is achieved by a network device of handling a packet tunnel according to the independent claim here below. The dependent claims pertain to corresponding further developments and improvements.

The invention is set out in the appended set of claims.

### Brief Description of the Drawings

Fig. 1 is a schematic diagram of a communication system according to an example of the present invention.
Fig. 2 is a schematic diagram of a network device according to an example of the present invention.
Fig. 3 is a schematic diagram of a communication system according to an example of the present invention.
Fig. 4 is a schematic diagram of a network device according to an example of the present invention.
Fig. 5 is a schematic diagram of a mapping table according to an example of the present invention.
Fig. 6 is a flowchart of a process according to an example of the present invention.

### Detailed Description

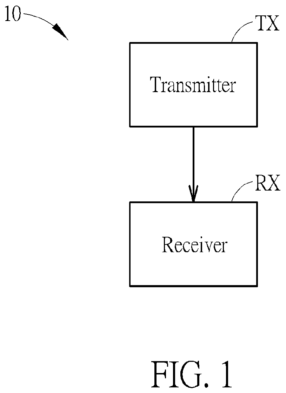

Fig. 1 is a schematic diagram of a communication system 10 according to an example of the present invention. The communication system 10 may be any communication system using an orthogonal frequency-division multiplexing (OFDM) technique (or termed as discrete multi-tone modulation (DMT) technique), and is briefly composed of a transmitter TX and a receiver RX. In Fig. 1, the transmitter TX and the receiver RX are simply utilized for illustrating the structure of the communication system 10. For example, the communication system 10 may be any wired communication system such as an asymmetric digital subscriber line (ADSL) system, a power line communication (PLC) system or an Ethernet over coax (EOC), or may be any wireless communication system such as a wireless local area network (WLAN), a Digital Video Broadcasting (DVB) system, a Long Term Evolution (LTE) system, a Long Term Evolution-advanced (LTE-A) system or a 5th generation (5G) system. For example, the transmitter TX may be an access point (AP) in the WLAN. In addition, the transmitter TX and the receiver RX may be installed in a device such as a mobile phone, a laptop, a tablet computer, etc., and are not limited herein.

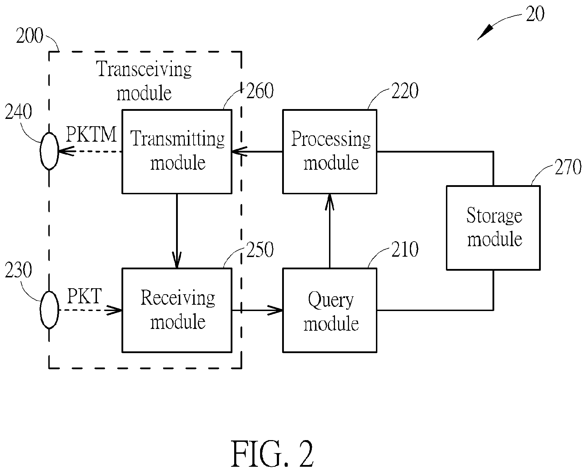

Fig. 2 is a schematic diagram of a network device according to an example of the present invention, and can be utilized in the transmitter TX or the receiver RX of Fig. 1. The network device may comprise a transceiving module 200, a query module 210, a processing module 220, an input port 230 and an output port 240. The transceiving module 200 may comprise a receiving module 250 and a transmitting module 260. In detail, the receiving module 250 receives a packet PKT from the input port 230. The query module 210 is coupled to the receiving module 250, for querying a mapping table according to the input port 230 and a header of the packet PKT, to generate a query result. The processing module 220 is coupled to the query module 210, for performing instructions of determining a transformed header and an output port (e.g., the output port 240) according to the querying result; and replacing the header with the transformed header, to generate a transformed packet (e.g., a packet PKTM shown in Fig. 2). The transmitting module 260 is coupled to the processing module, for transmitting the transformed packet via the output port.

In one example, the network device 20 further comprises a storage module 270. The storage module 270 is coupled to the query module 210 and the processing module 220, for storing the mapping table. In one example, the instruction of determining the transformed header and the output port according to the querying result comprises a tunnel message comprising the transformed header and the output port when the querying result indicates that the mapping table comprises the tunnel message comprising the input port 230 and the header, and determining the transformed header and the output port according to the input port 230 and the header when the querying result indicates that the mapping table does not comprise the tunnel message comprising the input port 230 and the header. That is, when he mapping table comprises information corresponding to the input port and the header, the processing module 220 can directly utilize the information for transmitting the packet. When he mapping table lacks the information corresponding to the input port and the header, the processing module 220 has to generate the information by itself. In one example, the processing module 220 generates the tunnel message and stores the tunnel message in the mapping table according to a routing table of a core layer and tunnel information, when the querying result indicates that the mapping table does not comprise the tunnel message comprising the input port and the header.

In one example, the header comprises an Ethernet header, and the transformed header comprises an IP header. In one example, the transformed header comprises the header and a tunnel header corresponding to the input port and the header. For example, the above packet can be the packet received by the transmitter TX, and the transformed header can be the transformed header of the transformed packet transmitted by the transmitter TX. In one example, the header comprises an IP header, the transformed header comprises an Ethernet header, and the transformed header does not comprise the IP header. In one example, the header comprises the transformed header and a tunnel header corresponding to the input port and the header. For example, the above packet can be the packet received by the receiver RX, and the transformed header can be the transformed header of the transformed packet transmitted by the receiver RX. That is, the network device 20 can transform an Ethernet packet into an IP packet, and can also transform the IP packet into the Ethernet packet.

The present invention provides the method of handling the packet tunnel according to the above examples, which can improve efficiency of processing a routing and a tunneling, to solve the problem of that current network devices are inefficient and expensive.

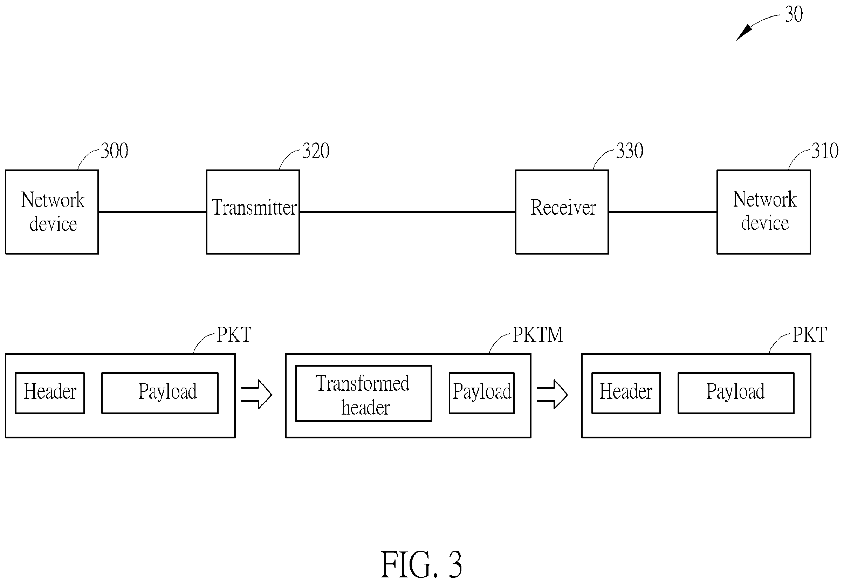

Fig. 3 is a schematic diagram of a communication system 30 according to an example of the present invention. The communication system 30 may comprise network devices 300 and 310, a transmitter (e.g., tunnel endpoint) 320 and a receiver (e.g., tunnel endpoint) 330. The network device 20 in Fig. 2 may be utilized to realize the transmitter 320 and the receiver 330, for handling a packet PKT and a packet PKTM. The packet PKT may comprise a header and a payload. The packet PKTM may comprise a transformed header and the payload. In detail, the network devices 300 and 310 may be bridges, gateways, routers, hubs, switch hubs, layer 2 (L2) switches, mobile phones, laptops, etc.

The transmitter 320 is coupled to the network devices 300, for receiving the packet PKT from the network devices 300. The transmitter 320 replaces the header of the packet PKT with the transformed header in a tunnel message, to generate the packet PKTM, when the tunnel message in the mapping table of the transmitter 320 comprises the header and the input port. The transmitter 320 first generates the transformed header by itself and then replaces the header of the packet PKT with the transformed header, to generate the packet PKTM, when the tunnel message comprising the header and the input port does not exist in the mapping table of the transmitter 320.

The receiver 330 is coupled to the transmitter 320, for receiving the packet PKTM from the transmitter 320. The receiver 330 replaces the header of the packet PKTM with the transformed header in a tunnel message, to generate (recover) the packet PKT, when the tunnel message in the mapping table of the receiver 330 comprises the header and the input port. The receiver 330 first generates the transformed header by itself and then replaces the header of the packet PKTM with the transformed header, to generate the packet PKT, when the tunnel message comprising the header and the input port does not exist in the mapping table of the receiver 330.

Detailed operations of the transmitter 320 and the receiver 330 can be referred to the operation of the network device 20, and is not repeated herein.

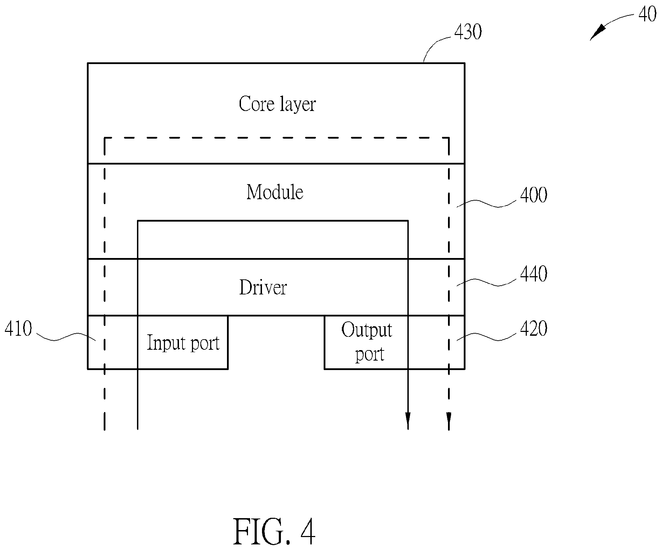

Fig. 4 is a schematic diagram of a network device 40 according to an example of the present invention. The network device 40 may comprise a module 400, a core layer 430, a driver 440, an input port 410 and an output port 420. The module 400 may be utilized to realize the transceiving module 200, the query module 210, the processing module 220 and the storage module 270 in Fig. 2. The input port 410 and the output port 420 may be utilized to realize the input port 230 and the output port 240 in Fig. 2, respectively. The dotted arrow is a path via which the packet PKT is transmitted, when the querying result indicates that the mapping table does not comprise the tunnel message comprising the input port 410 and the header. The solid arrow is a path via which the packet PKT is transmitted, when the querying result indicates that the mapping table comprises the tunnel message comprising the input port 410 and the header. The driver 440 may be utilized to drive the network device to transmit and receive the packet. That is, the packet PKT does not need to be transmitted via the core layer 430 for performing the routing and the tunneling process, when the querying result indicates that the mapping table comprises the tunnel message comprising the input port and the header.

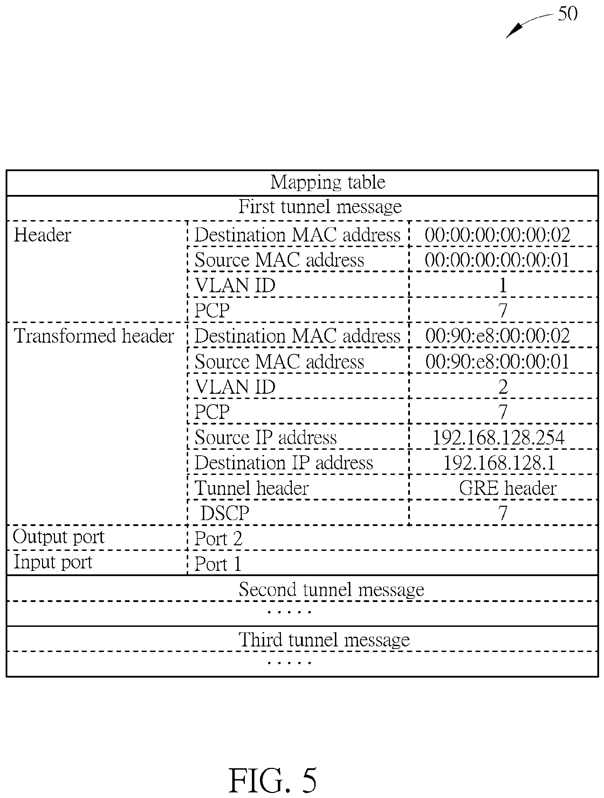

Fig. 5 is a schematic diagram of a mapping table 50 according to an example of the present invention. In one example, the mapping table 50 may be utilized in the network device 20 in Fig. 2, for realizing the mapping table 270. In one example, the mapping table 50 may be utilized in the communication system 30 in Fig. 3, for realizing the mapping table in the transmitter 320. The mapping table 50 may comprise a first tunnel message, a second tunnel message and a third tunnel message. The first tunnel message may comprise a header, a transformed header, an input port and an output port. The header may comprise a destination MAC address (e.g., 00:00:00:00:00:02), a source MAC address (e.g., 00:00:00:00:00:01), a Virtual Local Area Network (VLAN) identifier (VID) (e.g., 1) and a Priority Code Point (PCP) (e.g., 7). The transformed header may comprise a destination MAC address (e.g., 00:90:e8:00:00:02), a source MAC address (e.g., 00:90:e8:00:00:01), a VLAN ID (e.g., 2), a PCP (e.g., 7), a source IP address (e.g., 192.168.128.254), a destination IP address (e.g., 192.168.128.1), a tunnel header (e.g., GRE header) and a Differentiated Services Code Point (DSCP) (e.g., 7).

In detail, the first tunnel message, the second tunnel message or the third tunnel message may be the tunnel message in the aforementioned examples. "00:00:00:00:00:02" may be the MAC address of the network device 310. "00:00:00:00:00:01" may be the MAC address of the network device 300. "1" may be the VID of the packet PKT, for identifying which VLAN the packet PKT belongs to. "7" may be the PCP of the packet PKT, for identifying a priority of the packet PKT transmitted in a link layer. "00:90:e8:00:00:02" may be the MAC address of the receiver 330. "00:90:e8:00:00:01" may be the MAC address of the transmitter 320. "2" may be the VID of the packet PKTM. "192.168.128.254" may be the IP address of the transmitter 320. "192.168.128.1" may be the IP address of the receiver 330. The GRE header may be the tunnel header of the packet PKTM. "7" may be the DSCP of the packet PKTM, for identifying a priority of the packet PKTM transmitted in a network layer.

The transmitter 320 replaces the header of the packet PKT with the transformed header in the first tunnel message, to form the transformed packet (e.g., the packet PKTM), when the header and the input port of the first tunnel message conform to (are the same with) the header of the packet PKT and the input port 230. The transmitter 320 transmits the transformed packet to the receiver 330 via the output port (e.g., the output port 240) of the first tunnel message. The network device 20 generates the tunnel message (e.g., the third tunnel message) and stores the tunnel message in the mapping table 50 according to the routing table of the core layer and the tunnel information, when there is no tunnel message with the header and the input port conforming to the header of the packet PKT and the input port 230 in the mapping table 50.

According to the above description, it can be seen that the transmitter 320 can transform the Ethernet packet PKT without the IP header in the link layer into the packet PKTM with the IP header in the network layer, and transmit the network layer packer PKTM through the network layer to the receiver 330 via the tunnel. The receiver 330 can recover the Ethernet packet PKT without the network layer header from the packet PKTM with the network layer header. That is, the present invention provides the method of handling the packet tunnel, the Ethernet packet without the network layer header can be transmitted in the network layer according to the cross protocol layer method. Furthermore, the packet can be processed more efficiently, and the method therefore reduces the time taken by the network device to perform the routing process and the tunneling process.

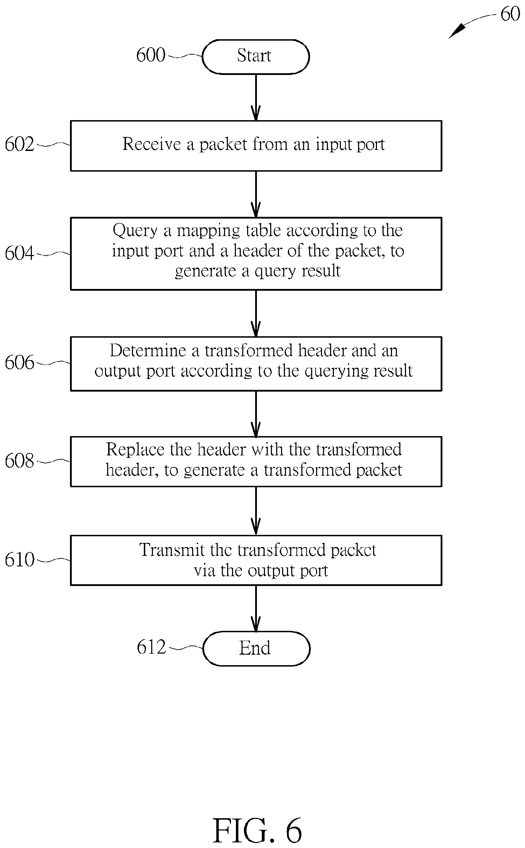

Operations of the network device 20 in the above examples can be summarized into a process 60 shown in Fig. 6. The process 60 includes the following steps:
Step 600: Start.
Step 602: Receive a packet from an input port.
Step 604: Query a mapping table according to the input port and a header of the packet, to generate a query result.
Step 606: Determine a transformed header and an output port according to the querying result.
Step 608: Replace the header with the transformed header, to generate a transformed packet.
Step 610: Transmit the transformed packet via the output port.
Step 612: End.

The process 60 is utilized to illustrate the example of the method of handling the packet tunnel of the network device 20. Detailed descriptions and alternatives can be referred to the above, and is not repeated herein.

It should be noted that realizations of the network device 20 (including the transceiving module 200, the query module 210, the processing module 220, the storage module 270, the input port 230 and the output port 240) are various. For example, the devices mentioned above may be integrated into one or more devices. In addition, the network device 20 may be realized by hardware (e.g., circuit), software, firmware (known as a combination of a hardware device, computer instructions and data that reside as read-only software on the hardware device), an electronic system or a combination of the devices mentioned above, but is not limited herein.

To sum up, the present invention provides a device and a method of handling a packet tunnel. According to the mapping table, the network device may process the packets with the same header more efficiently, and to reduce the time taken by the network device to perform the routing process and the tunneling process.

## Claims

1. A network device (20) for handling a packet tunnel, the network device comprising:
a core layer of a network device performing a routing process that is determining a transmission path of a packet and a tunneling process that is building a tunnel for a received packet according to a routing table, when a routing is operated in a wireless network,
a receiving module (250), for receiving a packet from an input port (230);
a query module (210), coupled to the receiving module, for querying a mapping table according to the input port and a header of the packet, to generate a query result;
a processing module (220), coupled to the query module, for performing instructions of:
determining a transformed header and an output port (240) according to the querying result, wherein the instruction of determining the transformed header and the output port according to the querying result comprising:
a tunnel message comprising the transformed header and the output port, when the querying result indicates that the mapping table comprises the tunnel message comprising the input port and the header; and
determining the transformed header and the output port according to the input port and the header, and generating the tunnel message and storing the tunnel message in the mapping table according to the routing table of the core layer and tunnel information, when the querying result indicates that the mapping table does not comprise the tunnel message comprising the input port and the header; and
replacing the header with the transformed header, to generate a transformed packet; and a transmitting module (260), coupled to the processing module, for transmitting the
transformed packet via the output port.

2. The network device of claim 1, further comprising:
a storage module (270), coupled to the query module and the processing module, for storing the mapping table.

3. The network device of any of claims 1-2, **characterized in that** the transformed header comprises the header and a tunnel header corresponding to the input port and the header.

4. The network device of any of claims 1-3, **characterized in that** the header comprises the transformed header and a tunnel header corresponding to the input port and the header.

5. The network device of any of claims 1-4, **characterized in that** the header comprises an Ethernet header, and the transformed header comprises an IP header.

6. The network device of any of claims 1-5, **characterized in that** the header comprises an IP header, the transformed header comprises an Ethernet header, and the transformed header does not comprise the IP header.

7. A method for handling a packet tunnel for a network device, the method comprising the steps of:
receiving a packet from an input port (602);
querying a mapping table according to the input port and a header of the packet, to generate a query result (604);
determining a transformed header and an output port according to the querying result (606), wherein the instruction of determining the transformed header and the output port according to the querying result comprising:
a tunnel message comprising the transformed header and the output port, when the querying result indicates that the mapping table comprises the tunnel message comprising the input port and the header; and
determining the transformed header and the output port according to the input port and the header, and generating the tunnel message and storing the tunnel message in the mapping table according to a routing table of a core layer and tunnel information, when the querying result indicates that the mapping table does not comprise the tunnel message comprising the input port and the header, wherein the core layer of a network device performs a routing process that is determining a transmission path of a packet and a tunneling process that is building a tunnel for a received packet according to the routing table, when a routing is operated in a wireless network;
replacing the header with the transformed header, to generate a transformed packet (608); and
transmitting the transformed packet via the output port (610).

8. The method of claim 7, **characterized in that** the transformed header comprises the header and a tunnel header corresponding to the input port and the header.

9. The method of any of claims 7-8, **characterized in that** the header comprises the transformed header and a tunnel header corresponding to the input port and the header.

10. The method of any of claims 7-9, **characterized in that** the header comprises an Ethernet header, and the transformed header comprises an IP header.

11. The method of any of claims 7-10, **characterized in that** the header comprises an IP header, the transformed header comprises an Ethernet header, and the transformed header does not comprise the IP header.

## Patentansprüche

1. Netzwerkgerät (20) zur Handhabung eines Pakettunnels, worin das Netzwerkgerät umfasst:
eine Kernschicht eines Netzwerkgerätes, die einen Routing-Prozess, der einen Übertragungspfad eines Pakets bestimmt, und einen Tunneling-Prozess, der einen Tunnel für ein empfangenes Paket gemäß einer Routing-Tabelle aufbaut, durchführt, wenn ein Routing in einem drahtlosen Netzwerk betrieben wird,
ein Empfangsmodul (250) zum Empfangen eines Pakets von einem Eingabeport (230);
ein Abfragemodul (210), das mit dem Empfangsmodul gekoppelt ist, zum Abfragen einer Zuordnungstabelle gemäß dem Eingabeport und einem Header des Pakets, um ein Abfrageergebnis zu erzeugen;
ein Verarbeitungsmodul (220), das mit dem Abfragemodul gekoppelt ist, um die Anweisungen auszuführen:
Bestimmen eines transformierten Headers und eines Ausgabeports (240) gemäß dem Abfrageergebnis, wobei die Anweisung zum Bestimmen des transformierten Headers und des Ausgabeports gemäß dem Abfrageergebnis umfasst:
eine Tunnelnachricht, die den transformierten Header und den Ausgabeport umfasst, wenn das Abfrageergebnis anzeigt, dass die Zuordnungstabelle die Tunnelnachricht umfasst, die den Eingabeport und den Header umfasst; und
Bestimmen des transformierten Headers und des Ausgabeports gemäß dem Eingabeport und dem Header und Erzeugen der Tunnelnachricht und Speichern der Tunnelnachricht in der Zuordnungstabelle gemäß der Routing-Tabelle der Kernschicht und der Tunnelinformation, wenn das Abfrageergebnis anzeigt, dass die Zuordnungstabelle die Tunnelnachricht, die den Eingabeport und den Header umfasst, nicht umfasst; und
Ersetzen des Headers durch den transformierten Header, um ein transformiertes Paket zu erzeugen; und
ein Sendemodul (260), das mit dem Verarbeitungsmodul gekoppelt ist, zum Senden des transformierten Pakets über den Ausgabeport.

2. Netzwerkgerät nach Anspruch 1, welches ferner umfasst:
ein Speichermodul (270), das mit dem Abfragemodul und dem Verarbeitungsmodul gekoppelt ist, um die Zuordnungstabelle zu speichern.

3. Netzwerkgerät nach einem der Ansprüche 1 bis 2, **dadurch gekennzeichnet, dass** der transformierte Header den Header und einen Tunnelheader umfasst, der dem Eingabeport und dem Header entspricht.

4. Netzwerkgerät nach einem der Ansprüche 1-3, **dadurch gekennzeichnet, dass** der Header den transformierten Header und einen Tunnelheader umfasst, der dem Eingabeport und dem Header entspricht.

5. Netzwerkgerät nach einem der Ansprüche 1 bis 4, **dadurch gekennzeichnet, dass** der Header einen Ethernet-Header umfasst und der transformierte Header einen IP-Header umfasst.

6. Netzwerkgerät nach einem der Ansprüche 1-5, **dadurch gekennzeichnet, dass** der Header einen IP-Header umfasst, der transformierte Header einen Ethernet-Header umfasst und der transformierte Header nicht den IP-Header umfasst.

7. Verfahren zur Behandlung eines Pakettunnels für ein Netzwerkgerät, wobei das Verfahren die Schritte umfasst:
Empfangen eines Pakets von einem Eingabeport (602);
Abfragen einer Zuordnungstabelle gemäß dem Eingabeport und einem Header des Pakets, um ein Abfrageergebnis (604) zu erzeugen;
Bestimmen eines transformierten Headers und eines Ausgabeports gemäß dem Abfrageergebnis (606), wobei die Anweisung zum Bestimmen des transformierten Headers und des Ausgabeports gemäß dem Abfrageergebnis umfasst:
eine Tunnelnachricht, die den umgewandelten Header und den Ausgabeport umfasst, wenn das Abfrageergebnis anzeigt, dass die Zuordnungstabelle die Tunnelnachricht umfasst, die den Eingabeport und den Header umfasst; und
Bestimmen des transformierten Headers und des Ausgabeports gemäß dem Eingabeport und dem Header, und Erzeugen der Tunnelnachricht und Speichern der Tunnelnachricht in der Zuordnungstabelle gemäß einer Routing-Tabelle einer Kernschicht und Tunnelinformationen, wenn das Abfrageergebnis anzeigt, dass die Zuordnungstabelle die Tunnelnachricht nicht umfasst, die den Eingabeport und den Header umfasst, wobei die Kernschicht des Netzwerkgerätes einen Routing-Prozess, der einen Übertragungspfad eines Pakets bestimmt, und einen Tunneling-Prozess durchführt, der gemäß der Routing-Tabelle einen Tunnel für ein empfangenes Paket aufbaut, wenn ein Routing in einem drahtlosen Netzwerk betrieben wird;
Ersetzen des Headers durch den transformierten Header, um ein transformiertes Paket zu erzeugen (608); und
Übertragen des transformierten Pakets über den Ausgabeport (610).

8. Verfahren nach Anspruch 7, **dadurch gekennzeichnet, dass** der transformierte Header den Header und einen Tunnelheader umfasst, der dem Eingabeport und dem Header entspricht.

9. Verfahren nach einem der Ansprüche 7-8, **dadurch gekennzeichnet, dass** der Header den transformierten Header und einen Tunnelheader umfasst, der dem Eingabeport und dem Header entspricht.

10. Verfahren nach einem der Ansprüche 7-9, **dadurch gekennzeichnet, dass** der Header einen Ethernet-Header umfasst und der transformierte Header einen IP-Header umfasst.

11. Verfahren nach einem der Ansprüche 7-10, **dadurch gekennzeichnet, dass** der Header einen IP-Header umfasst, der transformierte Header einen Ethernet-Header umfasst und der transformierte Header nicht den IP-Header umfasst.

## Revendications

1. Dispositif de réseau (20) pour gérer un tunnel de paquets, le dispositif de réseau comprenant:
une couche centrale d'un dispositif de réseau exécutant un processus de routage qui détermine un chemin de transmission d'un paquet et un processus de tunnelage qui construit un tunnel pour un paquet reçu selon une table de routage, lorsque le routage est opéré dans un réseau sans fil,
un module de réception (250), pour recevoir un paquet d'un port d'entrée (230);
un module d'interrogation (210), couplé au module de réception, pour interroger une table de correspondance en fonction du port d'entrée et d'un en-tête du paquet, afin de générer un résultat d'interrogation;
un module de traitement (220), couplé au module d'interrogation, pour exécuter les instructions suivantes:
déterminer un en-tête transformé et un port de sortie (240) en fonction du résultat d'interrogation, l'instruction consistant à déterminer l'en-tête transformé et le port de sortie en fonction du résultat d'interrogation comprenant:
un message tunnel comprenant l'en-tête transformé et le port de sortie, lorsque le résultat d'interrogation indique que la table de correspondance comprend le message tunnel comprenant le port d'entrée et l'en-tête; et
déterminer l'en-tête transformé et le port de sortie en fonction du port d'entrée et de l'en-tête, et générer le message tunnel et stocker le message tunnel dans la table de correspondance en fonction de la table de routage de la couche centrale et des informations du tunnel, lorsque le résultat d'interrogation indique que la table de correspondance ne comprend pas le message tunnel comprenant le port d'entrée et l'en-tête; et
remplacer l'en-tête par l'en-tête transformé, afin de générer un paquet transformé; et
un module de transmission (260), couplé au module de traitement, pour transmettre le paquet transformé via le port de sortie.

2. Dispositif de réseau de la revendication 1, comprenant en outre:
un module de stockage (270), couplé au module d'interrogation et au module de traitement, pour stocker la table de correspondance.

3. Dispositif de réseau de l'une des revendications 1 à 2, **caractérisé par le fait que** l'en-tête transformé comprend l'en-tête et un en-tête de tunnel correspondant au port d'entrée et à l'en-tête.

4. Dispositif de réseau de l'une des revendications 1 à 3, **caractérisé par le fait que** l'en-tête comprend l'en-tête transformé et un en-tête de tunnel correspondant au port d'entrée et à l'en-tête.

5. Dispositif de réseau de l'une des revendications 1 à 4, **caractérisé par le fait que** l'en-tête comprend un en-tête Ethernet et que l'en-tête transformé comprend un en-tête IP.

6. Dispositif de réseau de l'une des revendications 1 à 5, **caractérisé par le fait que** l'en-tête comprend un en-tête IP, l'en-tête transformé comprend un en-tête Ethernet, et l'en-tête transformé ne comprend pas l'en-tête IP.

7. Méthode de traitement d'un tunnel de paquets pour un dispositif de réseau, la méthode comprenant les étapes suivantes:
réception d'un paquet à partir d'un port d'entrée (602);
interroger une table de correspondance en fonction du port d'entrée et d'un en-tête du paquet, afin de générer un résultat d'interrogation (604);
déterminer un en-tête transformé et un port de sortie en fonction du résultat d'interrogation (606), l'instruction de déterminer l'en-tête transformé et le port de sortie en fonction du résultat d'interrogation comprenant:
un message tunnel comprenant l'en-tête transformé et le port de sortie, lorsque le résultat d'interrogation indique que la table de correspondance comprend le message tunnel comprenant le port d'entrée et l'en-tête; et
déterminer l'en-tête transformé et le port de sortie en fonction du port d'entrée et de l'en-tête, et générer le message tunnel et stocker le message tunnel dans la table de correspondance en fonction d'une table de routage d'une couche centrale et d'informations de tunnel, lorsque le résultat d'interrogation indique que la table de correspondance ne comprend pas le message tunnel comprenant le port d'entrée et l'en-tête, dans lequel la couche centrale d'un dispositif de réseau exécute un processus de routage qui détermine un chemin de transmission d'un paquet et un processus de tunnelage qui construit un tunnel pour un paquet reçu en fonction de la table de routage, lorsqu'un routage est opéré dans un réseau sans fil;
remplacer l'en-tête par l'en-tête transformé, afin de générer un paquet transformé (608); et
transmettre le paquet transformé via le port de sortie (610).

8. Méthode de la revendication 7, **caractérisée par le fait que** l'en-tête transformé comprend l'en-tête et un en-tête de tunnel correspondant au port d'entrée et à l'en-tête.

9. Méthode de l'une des revendications 7 à 8, **caractérisée par le fait que** l'en-tête comprend l'en-tête transformé et un en-tête tunnel correspondant au port d'entrée et à l'en-tête.

10. Méthode de l'une des revendications 7 à 9, **caractérisée par le fait que** l'en-tête comprend un en-tête Ethernet et que l'en-tête transformé comprend un en-tête IP.

11. Méthode de l'une des revendications 7 à 10, **caractérisée par le fait que** l'en-tête comprend un en-tête IP, l'en-tête transformé comprend un en-tête Ethernet et l'en-tête transformé ne comprend pas l'en-tête IP.
